# EUROPEAN PATENT SPECIFICATION

(11) **EP 0 577 308 B1**
(45) Date of publication and mention of the grant of the patent: **18.02.1998**
(21) Application number: 93304842.3
(22) Date of filing: 21.06.1993
(51) Int. Cl.: G06K 11/08

(54) **Input device**
Eingabegerät
Dispositif d'entrée

(30) Priority: 30.06.1992 GB 9213913
(43) Date of publication of application: 05.01.1994
(73) Proprietor: International Business Machines Corporation, Armonk, N.Y. 10504 (US)
(72) Inventor: Lowe, Anthony Cyril, Ayrshire, PA17 5DR (GB); Pietrzak, Christopher C., Winchester, Hampshire, S022 4BJ (GB)
(74) Representative: Burt, Roger James, Dr.

(56) References cited:
- EP-A- 0 301 715
- EP-A- 0 366 112
- EP-A- 0 374 767
- EP-A- 0 520 669
- WO-A-90/03014
- US-A- 5 173 793

## Description

The present invention relates to an input device for a visual display screen.

Input devices for visual display screens are particularly useful in cluttered computing environments where conventional data entry devices such as keyboards and mice are impractical because they occupy valuable working space.

EP-A-0 366 112, which is used to delimit claim 1 described an example of a conventional electromechanical optical input device in which first and second light beams are scanned across a plane display screen by mechanical rotating beam scanners. The first light beam is scanned from one side of the screen and the second light beam is scanned from the other side. To operate the touch screen, an operator places a retroreflective stylus at a desired location on the screen. The stylus reflects portions of the light beams back towards their respective sources. In response to detection of the reflected portions at the sources, via photodetectors, the location of the stylus is determined from the respective angular positions of the two light beams incident on the stylus. EP-A-0 301 715 discloses a display device, wherein colour selective sequential illumination of the display matrix is effected by switching liquid crystal portions.

EP-A-0 520 669 falling within the terms of Article 54(3)EPC discloses to scan a light beam linearly across a plane by using a LCD mask.

In accordance with the present invention, there is now provided an input device for a visual display, the device comprising: a light source; a scanner for angularly scanning a light beam from the light source across a plane; and a photodetector for detecting interruption of the beam by an article positioned in the plane; characterised in that the scanner comprises a shutter having a linear array of addressable, electrically actuable, shutter elements, each element being individually operable to transmit or block light from the light source under the control of a corresponding electrical signal.

Because the light beam is scanned a shutter rather than a mechanical scanner, an input device of the present invention is advantageously more reliable than conventional electromechanical optical input devices.

The device preferably comprises a processor for determining the position of the article in response to the photodetector detecting the presence of the article and as a function of the address or addresses in the array of the element or elements transmitting the interrupted beam or beams.

Because there is no inertia associated with the shutter, an input device of the present invention can advantageously track any motion of the article at higher speeds than conventional electromechanical optical input devices.

In a preferred embodiment of the present invention, the processor is adapted to track the position of the article in the approximate plane by actuating only elements of the array transmitting interrupted beams. This advantageously permits still faster tracking of the stylus and furthermore enables the input device to be serviced by less processing power.

The scanner may, for convenience and simplicity, comprise a diverging lens for generating a diverging envelope of light beams from light generated by the light source.

The scanner may comprise a mirror for directing the diverging envelope of rays towards the shutter. The mirror advantageously reduces the space required for implementing the present invention.

The light source preferably comprises a condenser for producing a substantially collimated light beam. This advantageously improves the sensitivity of the present invention by increasing the intensity of the light beam detected by the photodetector.

Preferably, the light source is driven by a pulse signal to generate pulses of light. This advantageously provides a further improvement in the intensity of the light beam detected at the photodetector.

The photodetector is preferably phase-locked to the pulse signal to advantageously improve the signal to noise ratio of the photodetector.

Preferably, the photodetector comprises a bandpass filter adapted to substantially prevent the photodetector from detecting light of wavelengths that are not generated by the light source. This advantageously provides a further improvement in the signal to ratio of the photodetector.

It will be appreciated that the present invention extends to a display device, such as for example a liquid crystal display or a CRT display, comprising an input device as hereinbefore described.

Preferred embodiments of the present invention will now be described with reference to the accompanying drawings in which:
Figure 1 is a block diagram of a input device of the present invention;
Figure 2 is a block diagram of a transceiver for the input device;
Figure 3 is a block diagram of the transceiver in operation;
Figure 4 is a block diagram of a liquid crystal shutter for the transceiver;
Figure 5 is a block diagram of the input device in operation;
Figure 6 is a block diagram of another transceiver for the touch sensitive input device;

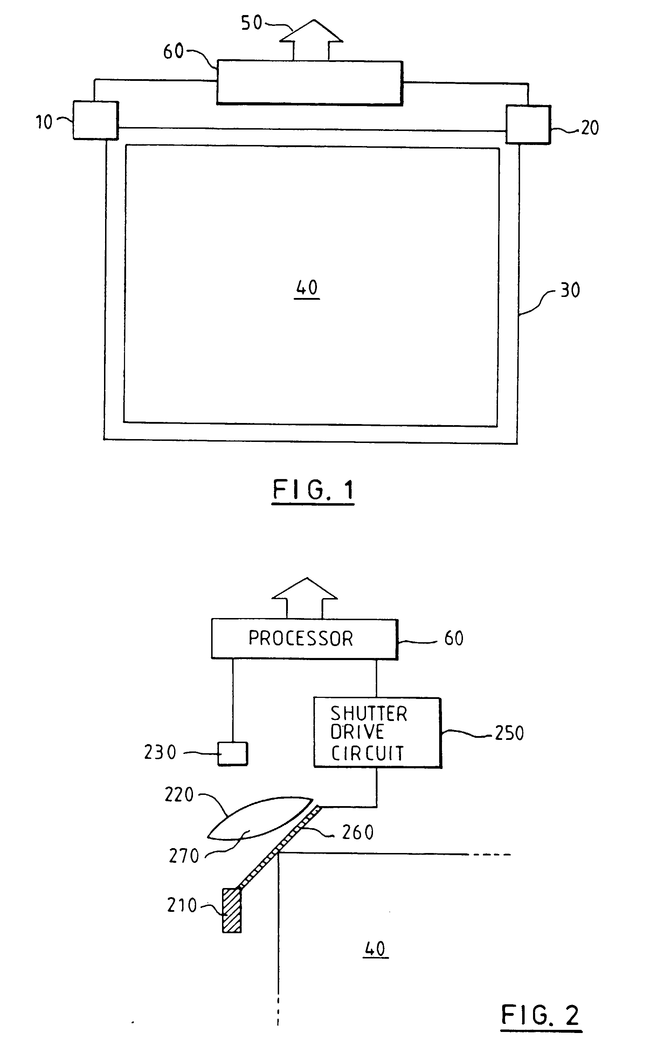

Referring first to Figure 1, an example of an input device of the present invention comprises two light transceivers 10,20 mounted on opposite sides of a bezel 30 that can be releasably secured to the screen 40 of a visual display (not shown). The transceivers 10,20 receive electrical control signals from, and transmit electrical output signals to, a processor 60. The processor has a digital output 50 that may be connected to an input/output adaptor such as a mouse port of a host computer system such as a personal computer.

Referring now to Figure 2, each transceiver 10,20 comprises a light source in the form of a laser diode 210 directed towards a cylindrical lens 270. The face of the lens remote from the laser diode 210 is silvered with a semi-reflective mirror 220. The mirror 220 is directed towards a linear array liquid crystal shutter 260 having N addressable elements. The shutter may be manufactured from Ferroelectric Smectic LC material or from Stacked Nematic Pi Cells. The elements can be electrically configured by drive signals from a shutter driver circuit 250 to either permit or block passage of light. The shutter driver circuit receives control signals from the processor 60. A photodetector 230 is located behind the mirror. The output of the photodetector is connected to the processor 60. The lens 270 is shaped to direct a divergent envelope of rays from the laser diode 210 towards the mirror but to focus rays directed from the shutter 260 towards the mirror 220 onto the photodetector 230. It will be appreciated however that, in other embodiments of the present invention, the single cylindrical lens 270 may be replaced by separate diverging and converging lenses.

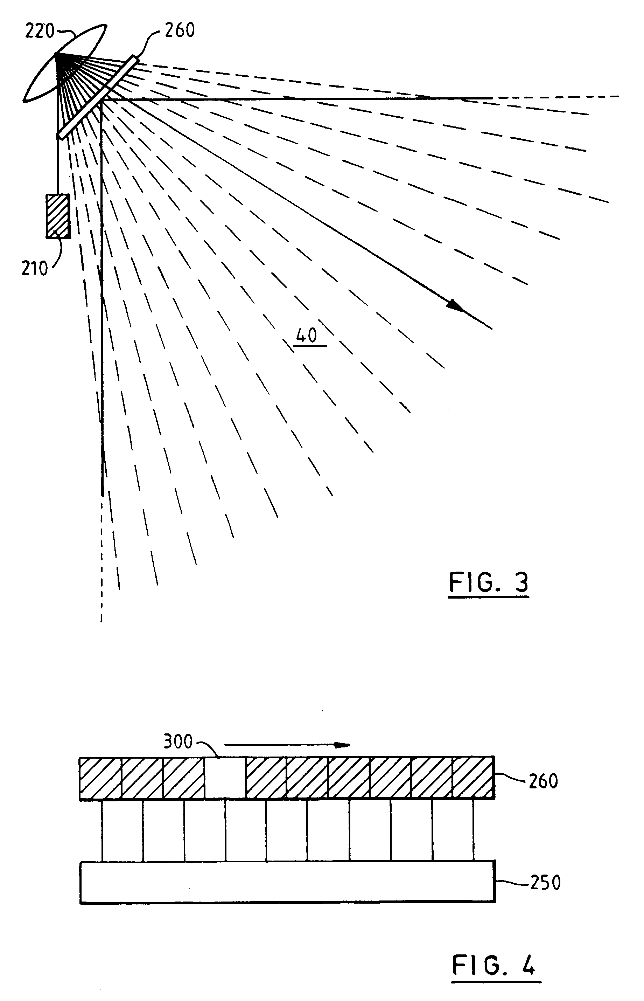

Referring to Figure 3, in each transceiver, the lens 270 converts a light beam generated by the laser diode 210 into a divergent envelope of rays that substantially fills the mirror 220. The mirror 220 partially reflects the envelope to generate a divergent fan of rays that would extend, in the absence of the shutter 260, to substantially cover the area of the screen 40 in a 90 degree arc. However, the driver circuit 250 configures the elements of the shutter 260 in such a manner that, at any instant in time, one of the elements is transparent to the rays and the remaining elements are opaque. Thus, at any instant in time, only one ray of the fan is permitted to extend across the screen 40.

With reference to Figure 4, the driver circuit 250 generates drive signals arranged to progressively move the transparent element 300 along the shutter 260 from one end to the other. Thus, in operation, the shutter 260 acts like a moving slit with each element in turn admitting a different ray of the fan. A beam of light is thereby effectively scanned across the screen. Each element remains transparent for a matter of microseconds. For the purpose of explanation, the shutter is depicted in Figure 4 as having ten elements. In practise however, to achieve acceptable sensitivity, the shutter may have more than a hundred elements.

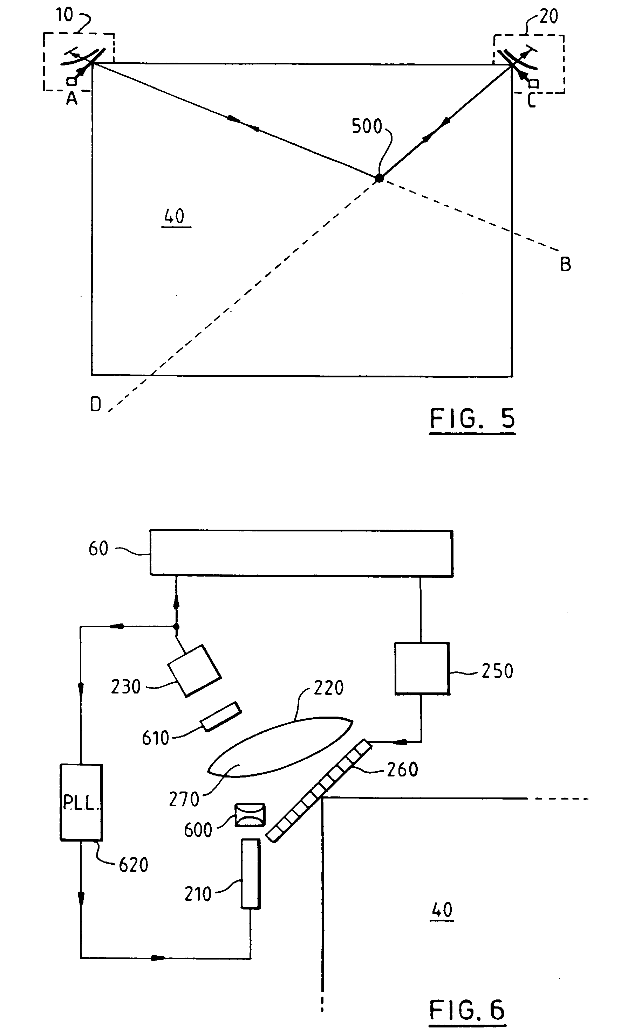

Turning now to Figure 5, to operate a touch sensitive input device of the present invention, an operator positions a retroreflective stylus 500 at a desired location on the screen 40. Portions of the light beams incident on the stylus 500 are reflected back towards their respective sources 10,20. At each transceiver 10,20, the reflected portion passes through the transparent element 300 of the shutter 260 towards the lens 270. A fraction of the reflected portion passes through the mirror 220 to be focused by the lens 270 onto the photodetector 230. This produces a change in the output of the photodetector 230. The change in the output triggers the processor 60 to read the address in the shutter 260 of the transparent element 300. The processor 60 determines the angular position of the incident ray from the address of the transparent element 300. The position of the stylus on the screen is identified by the intersection X of the incident rays, AB and CD, from the two transceivers 10,20. The processor 60 determines the intersection from the angular positions of the incident rays with respect to a common datum.

Because of the rays extending across the screen are divergent, the stylus 500 may be detected through several elements of the shutter 260. The position of the stylus 500 may therefore be determined by convolution of the angular positions. When the processor 60 detects the presence of the stylus through more than one element of one or both of the shutters, only those elements, together with enough on either side of them to permit limited overscanning, are addressed. Any motion of the stylus can therefore be detected at a higher speed than previously possible. This advantageously permits faster tracking of the stylus and enables the touch screen to be serviced by less processing power.

It will be appreciated that the light generated by the light source 210 may be of a wavelength or wavelengths within the visible region or invisible regions of the Electromagnetic Spectrum.

Referring now to Figure 6, in a preferred example of the present invention, the bezel 30 carrying the transducers 10,20 has a diagonal length of 356mm. In both transceivers 10,20, the light beam generated by the laser diode 210 is collimated to a diameter of approximately 2mm by an optical condenser 600 having an optical efficiency of about 40%. The liquid crystal shutter 260 is about 70% efficient and has first and second polariser efficiencies of around 40% and 80% respectively. The optical efficiencies of the mirror 220 and the lens 270 are around 70% and 80% respectively. The mirror 220 has both reflection and transmission efficiencies of approximately 45%. The lens 270 is shaped to diverge the light beam from the laser diode 210 across approximately 90 degree arc. The long pulsed mean power emission from the laser diode 210 is of the order of 5mW/steradian and diode output power efficiency is 5%. However, in operation, the laser diode 210 is actuated by a 100 us pulses at a duty cycle of 100us to produce a mean power emission of about 50mW/steradian. The apparatus is operated with a 2mm diameter stylus 500 reflecting around 50% of an incident beam. The photodetector 230 comprises a phototransistor producing an output current response of about 4.10E-2 A/W/cm∗2 superposed on a dark current of approximately 2.10E-9 A. An optical bandpass filter 610 is located between the lens and the photodetector to remove stray light. The output of the photodetector 230 is phase-locked to the pulses actuating the laser diode 270 to improve the signal to noise ratio.

The optical efficiency of the preferred embodiment of the present invention described in the preceding paragraph is a factor of about 5000 less than that of the aforementioned conventional electromechanical optical touch sensitive input device based on a 2mm collimated beam.

In operation, the photodetector 230 produces a photocurrent of about 1.5x10E-6 A in response to background illumination and about 2.4x10E-7 A in response to an incident ray reflected by the stylus and transmitted by the mirror 220. If the condenser 600 is omitted, the photocurrent produced by the photodetector 230 in response to the incident ray is reduced by a factor of around 20 to 1.2x10E-8 A. If the laser diode is operated continuously instead of pulsed, the photocurrent produced by the photodetector 230 in response to the incident beam is reduced by a further factor of about 10 to 1.2x10E-9 A. In other words, if the condenser is omitted and the laser diode 210 is operated continuously, the photocurrent produced by the photodetector 230 in response to the incident beam would be reduced to a noise level and would therefore be undetectable.

## Claims

1. An input device for a visual display, the device comprising: a light source (210); a scanner (220,260,270) for angularly scanning a light beam from the light source (210) across a plane (40); and a photodetector (230) for detecting interruption of the beam by an article positioned in the plane (40); characterised in that the scanner comprises a shutter (260) having a linear array of addressable, electrically actuable shutter elements (300), each element being individually operable to transmit or block light from the light source (210) under the control of a corresponding electrical signal.

2. A device as claimed in claim 1, and further comprising a processor (60) for determining the position of the article in response to the photodetector detecting the presence of the article and as a function of the address or addresses in the array of the element or elements transmitting the interrupted beam or beams.

3. A device as claimed in claim 2 wherein the processor is adapted to track the position of the articles in the approximate plane by actuating only elements of the array transmitting interrupted beams.

4. A device as claimed in any preceding claim, wherein the scanner (220,260,270) comprises a diverging lens (270) for generating a diverging envelope of light beams from light generated by the light source.

5. A device as claimed in claim 4, wherein the scanner (220,260,270) comprises a mirror (220) for directing the diverging envelope of rays towards the shutter.

6. A device as claimed in any preceding claim wherein the light source comprises a condenser (600) for producing a substantially collimated light beam.

7. A device as claimed in any preceding claim wherein the light source is driven by a pulse signal to generate pulses of light.

8. A device as claimed in claim 7 wherein the photodetector is phase-locked to the pulse signal.

9. A device as claimed in any preceding claim wherein the photodetector comprises a bandpass filter (610) adapted to substantially prevent the photodetector from detecting light of wavelengths that are not generated by the light source.

10. A visual display unit comprising a touch sensitive input device as claimed in any preceding claim.

## Patentansprüche

1. Ein Eingabegerät für eine Bildanzeige, wobei dieses Gerät folgendes umfaßt: eine Lichtquelle (210), einen Scanner (220, 260, 270) zur winkelförmigen Abtastung eines Lichtstrahls von der Lichtquelle (210) auf einer Ebene (40) und einen Photodetektor (230) zur Erkennung einer Unterbrechung des Strahls durch ein Objekt, das sich auf der Ebene (40) befindet, dadurch charakterisiert, daß der Scanner ein Schließelement (260) mit einem linearen Bereich adressierbarer, elektrisch zu betätigender Schließelemente (300) umfaßt, wobei jedes Element einzeln betätigt werden kann, um Licht von der Lichtquelle (210) unter der Steuerung eines entsprechenden elektrischen Signals durchzulassen oder zu blockieren.

2. Ein Gerät gemäß Anspruch 1, das weiterhin einen Prozessor (60) zur Bestimmung der Position des Objekts umfaßt, der aktiviert wird, wenn der Photodetektor ein Objekt erkennt, und als Funktion der Adresse oder Adressen im Bereich des Elements oder der Elemente den unterbrochenen Strahl oder die unterbrochenen Strahlen überträgt.

3. Ein Gerät gemäß Anspruch 2, wobei der Prozessor so ausgelegt ist, daß er die Position der Objekte in der ungefähren Ebene aufspürt, indem er nur Elemente des Bereichs betätigt, die unterbrochene Lichtstrahlen übertragen.

4. Ein Gerät gemäß allen obigen Ansprüchen, wobei der Scanner (220, 260, 270) eine Zerstreuungslinse (270) zur Erzeugung eines Streufächers aus Lichtstrahlen, die sich aus dem von der Lichtquelle erzeugten Licht zusammensetzen, umfaßt.

5. Ein Gerät gemäß Anspruch 4, wobei der Scanner (220, 260, 270) einen Spiegel (220) umfaßt, der den Streufächer aus Lichtstrahlen auf das Schließelement umlenkt.

6. Ein Gerät gemäß allen obigen Ansprüchen, wobei die Lichtquelle einen Kondensor (600) zur Erzeugung eines im wesentlichen parallel gerichteten Lichtstrahls umfaßt.

7. Ein Gerät gemäß allen obigen Ansprüchen, wobei die Lichtquelle durch ein Impulssignal zur Erzeugung von Lichtimpulsen gesteuert wird.

8. Ein Gerät gemäß Anspruch 7, wobei der Photodetektor mit dem Impulssignal phasenverriegelt ist.

9. Ein Gerät gemäß allen obigen Ansprüchen, wobei der Photodetektor einen Bandpaßfilter (610) umfaßt, der so ausgelegt ist, daß er im wesentlichen verhindert, daß der Photodetektor Licht mit einer Wellenlänge, wie sie von der Lichtquelle nicht erzeugt wird, erkennt.

10. Eine Bildanzeigeeinheit, die mit einer berührungsempfindlichen Eingabeeinheit gemäß allen obigen Ansprüchen ausgestattet ist.

## Revendications

1. Un dispositif d'entrée pour un affichage visuel, le dispositif comprenant : une source lumineuse (210); un scanneur (220, 260, 270) destiné à produire un balayage angulaire d'un faisceau lumineux venant de la source lumineuse (210) dans un plan (40); et un photodétecteur (230) destiné à détecter une interruption du faisceau par un article ayant été placé dans le plan (40);
caractérisé en ce que le scanneur comprend un obturateur (260) ayant une matrice linéaire d'éléments d'obturateur (300) actionnables électriquement, adressables, chaque élément étant susceptible d'être actionné individuellement pour transmettre ou bloquer la lumière venant de la source lumineuse (210), sous la commande d'un signal électrique correspondant.

2. Un dispositif selon la revendication 1, et comprenant en outre un processeur (60) destiné à déterminer la position de l'article en réponse à la détection par le photo-détecteur de la présence de l'article et en fonction de l'adresse ou des adresses dans la matrice du ou des éléments transmettant le faisceau ou les faisceaux interrompu(s).

3. Un dispositif selon la revendication 2, dans lequel le processeur est adapté pour suivre la trace de la position des articles dans le plan approprié, en actionnant seulement les éléments de la matrice qui transmettent des faisceaux interrompus.

4. Un dispositif selon l'une quelconque des revendications précédentes, dans lequel le scanneur (220, 260, 270) comprend une lentille divergente (270), destinée à générer une enveloppe divergente de faisceaux de lumière, constitués de la lumière ayant été générée par la source lumineuse.

5. Un dispositif selon la revendication 4, dans lequel le scanneur (220, 260, 270) comprend un miroir (220) destiné à diriger l'enveloppe divergente des rayons en direction de l'obturateur.

6. Un dispositif selon l'une quelconque des revendications précédentes, dans lequel la source lumineuse comprend un condenseur (600) destiné à produire un faisceau lumineux sensiblement collimaté.

7. Un dispositif selon l'une quelconque des revendications précédentes, dans lequel la source lumineuse est commandée par un signal d'impulsions, afin de générer des impulsions lumineuses.

8. Un dispositif selon la revendication 7, dans lequel le photodétecteur est verrouillé en phase, vis-à-vis du signal d'impulsion.

9. Un dispositif selon l'une quelconque des revendications précédentes, dans lequel le photodétecteur comprend un filtre passe-bande (610), adapté pour empêcher pratiquement que le photo-détecteur détecte de la lumière ayant des longueurs d'ondes n'ayant pas été générées par la source lumineuse.

10. Une unité d'affichage visuelle comprenant un dispositif d'entrée sensible au toucher, réalisé selon l'une quelconque des revendications précédentes.
